# EUROPEAN PATENT APPLICATION

(11) **EP 2 680 173 A2**
(43) Date of publication of application: **01.01.2014**
(21) Application number: 13305878.4
(22) Date of filing: 25.06.2013
(51) Int. Cl.: G06F 17/30

(54) **Determining implicit social networking relationships and organization**

(30) Priority: 29.06.2012 US 201261666558 P
(71) Applicant: Orange, 75015 Paris (FR)
(72) Inventor: Gay, Julian, San Francisco, CA 94110 (US); Lee, Dominic, San Francisco, CA 94086 (US); Nuzhnyi, Pylyp, San Francisco, CA 94103 (US)

(57) **Abstract**

A method is provided for determining an existence or strength of a relationship between a first and a second user of a storage database comprising first user documents owned by the first user and second user documents owned by the second user stored in the storage database, the method comprising: comparing the first user documents with the second user documents and creating a degree of similarity measure for the documents based on the comparing; and determining the existence or strength of the relationship between the first and second users based on the degree of similarity measure for the documents.

## Description

### BACKGROUND

Businesses are increasingly adopting software-as-a-service (SaaS)-based services and using the Cloud for data storage. These services are typically operated by separate companies, having distinct technical architectures and workflows, processes, and controls relevant to each service (for example, a Salesforce service has screens and roles appropriate to sales and marketing, while a Basecamp service has screens and roles appropriate to project management). Each service, either through explicit role definitions within each system or through implicit sharing relationships defined by shared resources, such as documents, contacts, or leads, can reveal aspects of the relationships between the people in the organizations subscribing to these SaaS-based services.

Users associated with a particular company can save files on Box or Dropbox. These files can include, e.g., legal frameworks documents, contract documents, etc. Other types of documents might be stored on the Salesforce service, a cloud solution for salespersons. The cloud storage is associated to a dedicated cloud service and each cloud storage presents a database structure dedicated to the type of service.

However, to date, analyzing and utilizing relationships between documents has not been utilized to full advantage, and what is needed is a way of determining these relationships, even when (or particularly when) they differ from preexisting defined relationships, such as might exist with an organizational hierarchy chart.

### SUMMARY

Various embodiments of the invention consider multiple websites or social networks to consolidate information on users and their relationships. By accessing a multiplicity of services and user data associated with these services, it is possible to generate and refine an organizational structure (which may or may not resemble the published organizational hierarchy) by looking at resources shared in these distinct services- in which users are collaborating (discernible through shared resources), in which users have access to other users' content (considering the directionality of the access, i.e., a user with administrative privileges may be able to "see" another's content, but not the other way around).

By connecting to and analyzing information across more than one service provides a greater insight that cannot be obtained by looking at a single service-in the cloud, one can create an aggregate viewpoint across multiple services and across multiple users.

A consolidated analysis can be performed across the different cloud services, using their specific types of documents. The service broker that performs the analysis has a panoramic vision of the different cloud storages. Various techniques may be used in each of the cloud services to infer a first relationship, and then all the determined relationships per cloud storage can be consolidated to determine a consolidated relationship.

Thus, a method is provided for determining an existence or strength of a relationship between a first and a second user of a storage database comprising first user documents owned by the first user and second user documents owned by the second user stored in the storage database, the method comprising: comparing the first user documents with the second user documents and creating a degree of similarity measure for the documents based on the comparing; and determining the existence or strength of the relationship between the first and second users based on the degree of similarity measure for the documents.

A further method is provided for determining an existence or strength of a first relationship between a first and a second user, a second relationship between the first and a third user, and a third relationship between the second user and the third user of a storage database comprising first user documents owned by the first user, second user documents owned by the second user, and third user documents owned by the third user stored in the storage database, the method comprising: comparing the first user documents with the third user documents and creating a first degree of similarity measure for the documents based on the comparing; comparing the second user documents with the third user documents and creating a second degree of similarity measure for the documents based on the comparing; and determining the existence or strength of the first, the second relationship, and the third relationship based on the first degree of similarity measure for the documents and the second degree of similarity measure for the documents.

An appertaining system for implementing the methods and non-transitory software media containing program code for executing the above methods is also provided.

### DESCRIPTION OF THE DRAWINGS

Figure 1 is a block diagram illustrating access by users to documents stored within different services;
Figure 2A is a block diagram illustrating overlapping files between two users on a service;
Figure 2B is a block diagram illustrating overlapping similar, but not exact, files between users on a service;
Figure 2C is a block diagram illustrating the use of weighting factors to influence the role different factors have in establishing a degree of similarity between users;
Figure 3A is a block diagram that adds a further user to the system illustrated in Figure 2A;
Figure 3B is a block diagram illustrating an exemplary hierarchical structure that may be derived based on implied relationships from the overlapping files;
Figure 4 is a flow diagram showing an exemplary interaction of system components used to determine content overlaps and to derive personal relationships based on the overlaps.

### DETAILED DESCRIPTION

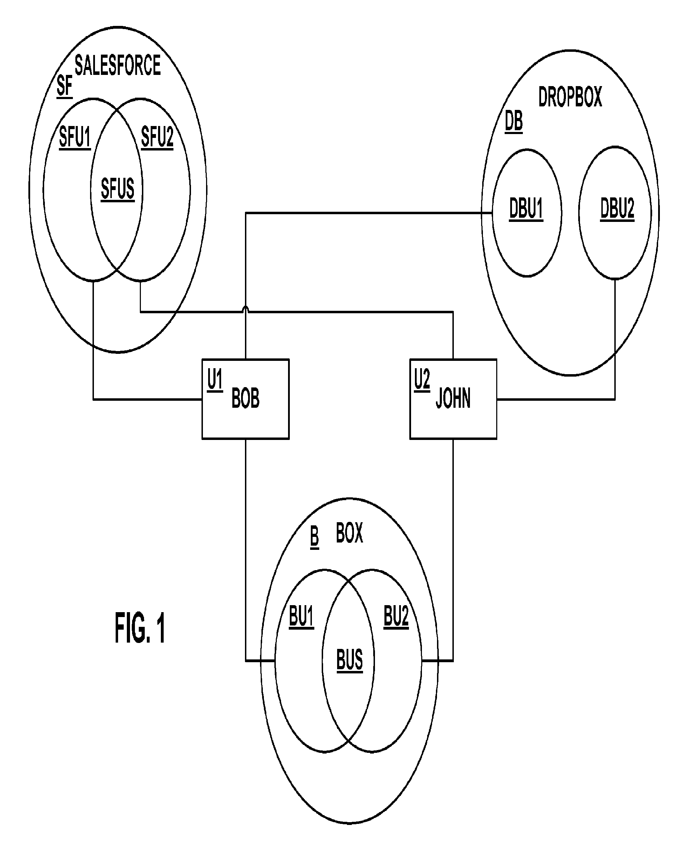

Referring to Figure 1, a network or cloud-based system is shown that has two users, Bob U1 and John U2. Each of these users have individual accounts in various on-line services and their own data and assets (such as documents) in these services. The exemplary services identified in Figure 1 are: a Salesforce SF service, a Dropbox DB service, and a Box B service. On both the Salesforce SF and Box B services, each of the users U1, U2 have assets in their individual storage areas SFU1, SFU2, BU1, BU2, as well as overlapping assets that they share SFUS, BUS. However, on the Dropbox DB service, the users' U1, U2 have completely separate and independent storage areas DBU1, DBU2 with no shared assets or assets in common. The services each have their own underlying access control/permissions/sharing systems (whether role-based, time-based, or utilizing some other mechanism).

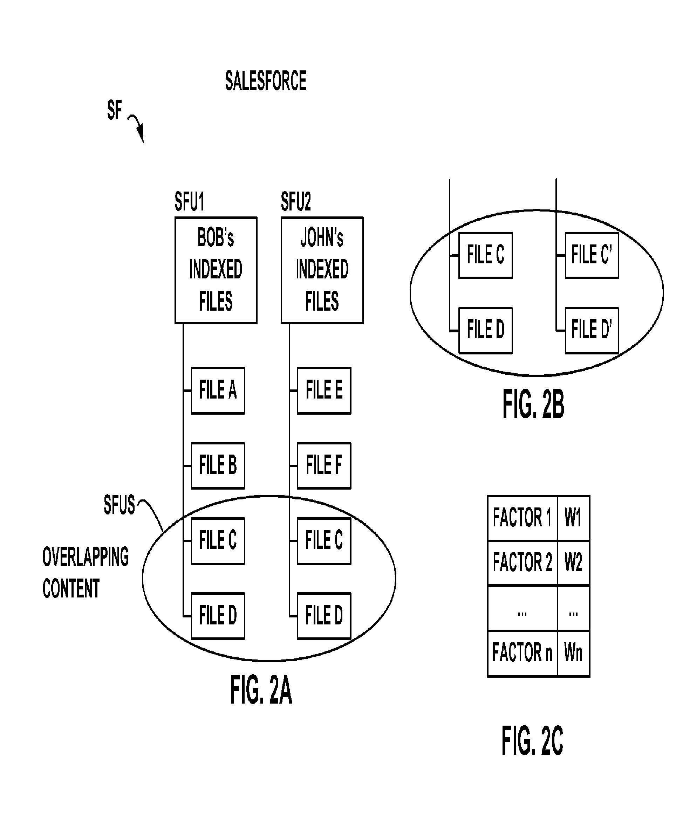

Figure 2A illustrates an example of overlapping content in the Salesforce SF service. As can be seen, Bob's indexed files SFU1 contain Files A, B, C, and D. John's indexed files SFU2 contain Files E, F, C, and D, where Files C and D comprise the overlapping content SFUS.

By examining the overlaps in shared assets (e.g., contacts, accounts, documents, etc.) across the different services, it is possible to infer a relationship between Bob U1 and John U2.

Furthermore, it is possible to examine the material in the overlapping content to determine the nature of the relationships. For example, if Bob U1 and John U2 share many Oracle contacts in Salesforce SF and also have a number of non-disclosure agreement (NDA) documents with people at Oracle stored in the Box B service, it is possible to infer that John and Bob work together and both have a relationship with Oracle. Although both of them have an account with Dropbox, there is no overlap, and therefore it may not be possible to infer any relationship.

File C as seen in Bob's index SFU1 can be identified as the same file in John's index SFU2 by examining multiple factors, such as name, creation date, hash of document content, etc. Any other document content or meta data comparison analysis could be utilized as well. As is illustrated in Figure 2B, an exact match might not be required-a relationship might be inferred even though File C and File C' are similar, but not exact copies. A measure of similarity could be utilized that could include name similarity, size, creation date, and also content-based aspects.

Referring to Figure 2C, for each of the measures or factors used (Factor 1-n), an associated weighting factor (W1-Wn) may be applied that provides an indication as to the strength of a relationship. By way of example, a number of exact file matches shared between two users might be assigned a large weighting factor as far as inferring a relationship, whereas a content of the documents associated with the term "light fixtures" might be assigned a minimal weighting factor since the company may be in the business of manufacturing light fixtures and thus a large number of documents contain the term "light fixtures" and an inference that two individuals are related based on this factor may not be warranted. Thus the process could be implemented in two broad steps, the first being acquiring the various factors from the users' documents, and then subsequently applying the weighting factors to determine the extent of the relationship. The relationship could further be defined on two or more dimensions, including an extent (or strength) of the relationship and the nature of the relationship (a data/knowledge-based relationship, a control-based relationship, a coordination-based relationship, etc.).

Additionally, the nature of the container itself can be weighted/factored in. For example, a technical documents repository might be much more useful (and hence, higher weighted) for determining if a technical relationship exists between two people than a human resources document repository (and hence, lower weighted). However, the weighting factors might be reversed if trying to determine a control relationship (boss-subordinate).

A semantic analysis service, like OpenCalais, could be utilized to assess a similarity between two documents. For example File C might be identified as having content describing Python and Java. Since these terms can relate to programming languages, the document content can be identified as relating to a programming language. and therefore is about a Programming Language. We can infer that Bob U1 and John U2 have a relationship and the nature of the relationship is around "Programming Languages".

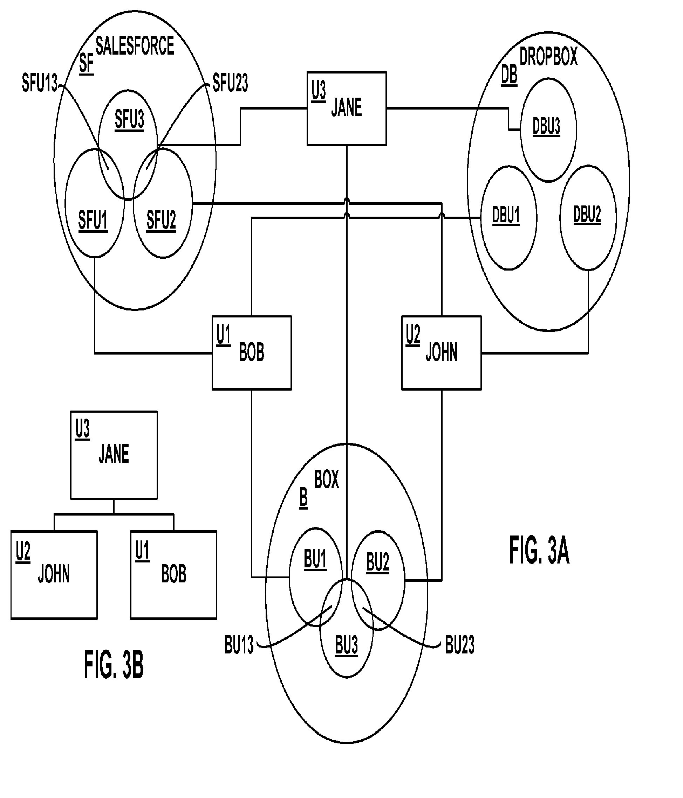

In addition to making inferences about relationships between two users U1, U2, it is also possible to leverage these sharing patterns and overlaps to ascertain a hierarchy between individuals. Referring to Figure 3A, for example, Jane U3 has content that overlaps between Bob U1 and John U2 in both Salesforce SFU13, SFU23 and Box BU13, BU23. Based on this information, it may be possible to infer, with some confidence interval (that would increase with the number of services accessible for comparing assets of individuals), that Jane has a supervisor relationship over John and Bob (see Figure 3B), or, in contrast, based on the document analysis, that Jane U3 is a secretary to both Bob U1 and John U2.

Even more indirect relationships can be determined through multiple intermediary nodes U3, U4, and U5 (not shown), i.e., the relationship between Bob U1 and John U2 can be inferred to have a relationship based on their relationships with U3, U4, and/or U5.

Alternately, it may reveal that Jane U3 has a relationship with Bob U1 and John U2 that is not captured formally within the organizational hierarch. For example, Jane U3 may be an expert at locating certain types of data. Bob U1 and John U2 may both recognize this and utilize Jane's U3 services whenever possible, despite the fact that there is no formal organizational relationship.

The measure of overlapping document sets could be extended beyond common physical files or digital content, but also could include mining entities inside the documents or content to show the nature of the relationship. For example, if Bob U1 and John U2 share a significant number of documents about Java, Ruby, and Python the system may conclude they have a relationship around programming languages.

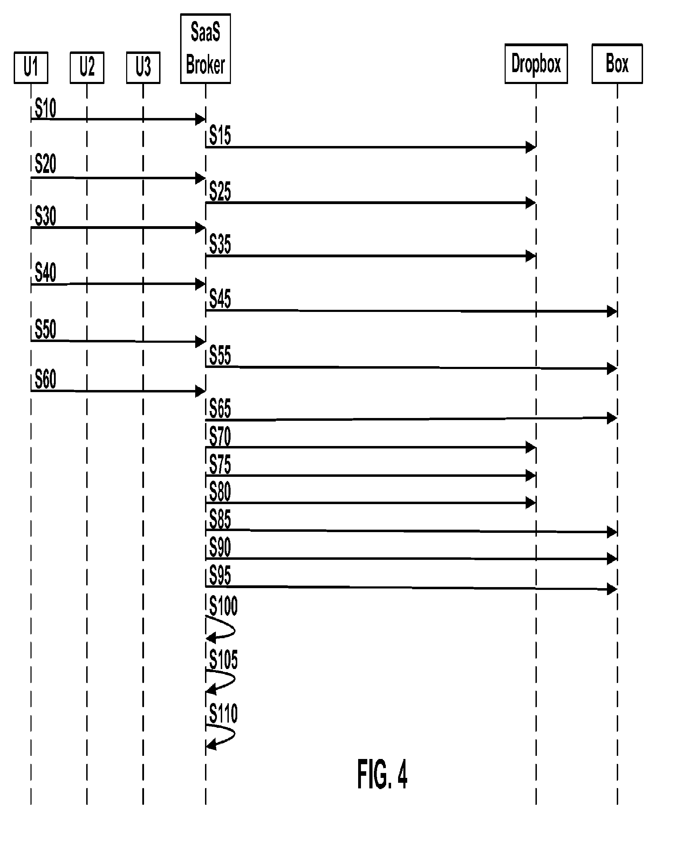

Figure 4 is a flow diagram showing an exemplary interaction of system components used to determine content overlaps and to derive personal relationships based on the overlaps. The system includes three users U1, U2, U3 who access a Dropbox service and a Box service via an SaaS Broker.

In step S10, the first user U1 attempts to connect to the Dropbox account and the SaaS Broker authorizes, in step S15, the first user U1 to access the Dropbox Account via, e.g., OAuth. In step S20, the second user U2 also attempts to connect to the Dropbox account and the SaaS Broker authorizes, in step S25, the second user U2 to access the Dropbox Account via, e.g., OAuth. Finally, In step S30, the third user U3 also attempts to connect to the Dropbox account and the SaaS Broker authorizes, in step S35, the third user U3 to access the Dropbox Account via, e.g., OAuth.

Starting at step S40, the process is repeated with respect to the Box account. In step S40, the first user U1 attempts to connect to the Box account and the SaaS Broker authorizes, in step S45, the first user U1 to access the Box account via, e.g., OAuth. In step S50, the second user U2 also attempts to connect to the Box account and the SaaS Broker authorizes, in step S55, the second user U2 to access the Box Account via, e.g., OAuth. Finally, In step S60, the third user U3 also attempts to connect to the Box account and the SaaS Broker authorizes, in step S65, the third user U3 to access the Box Account via, e.g., OAuth.

The SaaS Broker then indexes documents of the Dropbox account for the first user (step S70), the second user (step S75), and the third user (step S80). Similarly, the SaaS Broker indexes documents of the Box account for the first user (step S85), the second user (step S90), and the third user (step S95).

The SaaS Broker computes both Dropbox (step S100) and Box (step S105) hashes, timestamps, and/or other calculations on the documents. Finally, in step S110, the SaaS Broker uses the calculated values to make a determination of the extent of overlap of the documents and determine a strength of a connection between the users.

The system or systems described herein may be implemented on any form of computer or computers and the components may be implemented as dedicated applications or in client-server architectures, including a web-based architecture, and can include functional programs, codes, and code segments. Any of the computers may comprise a processor, a memory for storing program data and executing it, a permanent storage such as a disk drive, a communications port for handling communications with external devices, and user interface devices, including a display, keyboard, mouse, etc. When software modules are involved, these software modules may be stored as program instructions or computer readable codes executable on the processor on a non-volatile computer-readable media such as read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion. This media is readable by the computer, stored in the memory, and executed by the processor.

All references, including publications, patent applications, and patents, cited herein are hereby incorporated by reference to the same extent as if each reference were individually and specifically indicated as incorporated by reference and were set forth in its entirety herein.

For the purposes of promoting an understanding of the principles of the invention, reference has been made to the preferred embodiments illustrated in the drawings, and specific language has been used to describe these embodiments. However, no limitation of the scope of the invention is intended by this specific language, and the invention should be construed to encompass all embodiments that would normally occur to one of ordinary skill in the art.

Embodiments of the invention may be described in terms of functional block components and various processing steps. Such functional blocks may be realized by any number of hardware and/or software components that perform the specified functions. For example, the embodiments may employ various integrated circuit components, e.g., memory elements, processing elements, logic elements, look-up tables, and the like, which may carry out a variety of functions under the control of one or more microprocessors or other control devices. Similarly, where the elements are implemented using software programming or software elements, embodiments of the invention may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, embodiments of the present invention could employ any number of conventional techniques for electronics configuration, signal processing and/or control, data processing and the like. The words "mechanism" and "element" are used broadly and are not limited to mechanical or physical embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the invention unless the element is specifically described as "essential" or "critical".

The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.
The use of the terms "a" and "an" and "the" and similar referents in the context of describing the invention (especially in the context of the following claims) should be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein are performable in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed.

## Claims

1. A method for determining an existence or strength of a relationship between a first and a second user of a storage database comprising first user documents owned by the first user and second user documents owned by the second user stored in the storage database, the method comprising:
comparing the first user documents with the second user documents and creating a degree of similarity measure for the documents based on the comparing; and
determining the existence or strength of the relationship between the first and second users based on the degree of similarity measure for the documents.

2. The method of claim 1, wherein the comparing compares documents of a first type with documents of a second type.

3. The method of claim 1, wherein the creating a degree of similarity measure comprises:
creating a per-comparison degree of similarity measure; and
aggregating the per-comparison degree of similarity measures into a combined degree of similarity measure.

4. The method of claim 1, wherein the creating of the degree of similarity measure is based on a plurality of file attributes associated with the first user documents and the second user documents.

5. The method of claim 4, wherein the file attributes are related to content of the documents.

6. The method of claim 5, further comprising performing a semantic analysis on the content of the documents.

7. The method of claim 4, wherein the file attributes are related to metadata of the documents.

8. The method of claim 4, wherein each attribute is provided with a weighting factor in creating the degree of similarity measure.

9. The method of claim 1, wherein:
the storage database is a first storage database;
the first user and the second user utilize a second storage database to store further first user documents owned by the first user and to store further second user documents owned by the second user;
the comparing further comprises comparing the further first user documents with the second user documents; and
the creating of the degree of similarity measure is further based on the further comparing.

10. A method for determining an existence or strength of a first relationship between a first and a second user, a second relationship between the first and a third user, and a third relationship between the second user and the third user of a storage database comprising first user documents owned by the first user, second user documents owned by the second user, and third user documents owned by the third user stored in the storage database, the method comprising:
comparing the first user documents with the third user documents and creating a first degree of similarity measure for the documents based on the comparing;
comparing the second user documents with the third user documents and creating a second degree of similarity measure for the documents based on the comparing; and
determining the existence or strength of the first, the second relationship, and the third relationship based on the first degree of similarity measure for the documents and the second degree of similarity measure for the documents.

11. The method according to claim 10, wherein there is no direct overlap between the first user documents and the second user documents.

12. The method according to claim 10, further comprising using a plurality of intermediate users' documents in order to determine the existence or strength of the first relationship between the first and the second user.

13. A system for determining an existence or strength of a relationship between a first and a second user of a storage database comprising first user documents owned by the first user and second user documents owned by the second user stored in the storage database, comprising:
a comparing algorithm running on a processor of a broker computer that compares the first user documents with the second user documents and creating a degree of similarity measure for the documents based on the comparing; and
a determining algorithm that determines the existence or strength of the relationship between the first and second users based on the degree of similarity measure for the documents.

14. A non-transitory computer program product, comprising a computer usable medium having a computer readable program code embodied therein, said computer readable program code adapted to be executed to implement the method according to claim 1.
